# EUROPÄISCHE PATENTSCHRIFT

(11) **EP 2 616 408 B1**
(45) Veröffentlichungstag und Bekanntmachung des Hinweises auf die Patenterteilung: **25.02.2015**
(21) Anmeldenummer: 11754619.2
(22) Anmeldetag: 06.09.2011
(51) Int. Cl.: C04B 26/06, A47B 77/02, B29C 39/02, C08K 3/36, E03C 1/18

(54) **FORMTEIL, WIE BEISPIELSWEISE KÜCHENSPÜLBECKEN, WASCHBECKEN ODER DERGLEICHEN, SOWIE VERFAHREN ZUM HERSTELLEN EINES SOLCHEN FORMTEILS**
MOULDING, SUCH AS, FOR EXAMPLE, A KITCHEN SINK, WASH BASIN OR THE LIKE, AND METHOD FOR PRODUCING SUCH A MOULDING
ÉLÉMENT MOULÉ TEL QUE BAC D'ÉVIER, LAVABO OU ANALOGUE, ET PROCÉDÉ DE FABRICATION D'UN ÉLÉMENT MOULÉ DE CE TYPE

(30) Priorität: 17.09.2010 DE 102010046627
(43) Veröffentlichungstag der Anmeldung: 24.07.2013
(73) Patentinhaber: Schock GmbH, 94209 Regen (DE)
(72) Erfinder: PATERNOSTER, Rudolf, 94269 Rinchnach (DE); GEIER, Josef, 94209 Regen (DE); REICHENBERGER, Roland, 94209 Regen (DE)
(74) Vertreter: Crazzolara, Helmut
(86) Internationale Anmeldenummer: PCT/EP2011/004486
(87) Internationale Veröffentlichungsnummer: WO 2012/034663

(56) Entgegenhaltungen:
- EP-A1- 1 807 453
- EP-A1- 2 165 817
- EP-A2- 0 491 170
- DE-A1-102008 046 569

## Beschreibung

Die Erfindung betrifft ein Formteil, wie beispielsweise ein Küchenspülbecken, ein Waschbecken, eine Arbeitsplatte oder dergleichen, hergestellt aus einem Kompositwerkstoff mit einem ausgehärteten polymeren Bindemittel und darin eingelagerten Füllstoffpartikeln durch Abformen einer vorzugsweise mehrfach verwendbaren Form, sowie ein Verfahren zum Herstellen eines solchen Formteils.

Aus der EP 0 361 101 B2 ist ein derartiges Formteil bekannt, das durch Variation der Größe und Farbe der eingesetzten Füllstoffpartikel die unterschiedlichsten Anforderungen an das äußere Erscheinungsbild erfüllen kann und dabei sehr gute Gebrauchseigenschaften aufweist, insbesondere einen hohen Abriebwiderstand und eine hohe Kratzfestigkeit.

Aus der DE 10 2008 047 758 B3 ist ein Formteil bekannt, das nach dem Abformen auf mindestens einer Sichtseite derart bearbeitet ist, dass das Formteil auf der Sichtseite eine taktil und/oder visuell wahrnehmbare Welligkeit aufweist, und dass auf der Sichtseite Füllstoffpartikel bis an die Oberfläche ragen und dadurch einen Teil der Oberfläche der Sichtseite bilden.

Der Erfindung liegt die Aufgabe zugrunde, ein Formteil und ein zugehöriges Herstellverfahren bereitzustellen, bei dem die Reinigungsfähigkeit der Oberfläche des Formteils, insbesondere die Reinigungsfähigkeit der im Gebrauchszustand des Formteils im Wesentlichen horizontalen Sichtseite des Formteils, weiter verbessert ist, und dabei die guten mechanischen Gebrauchseigenschaften der bekannten Formteile erhalten bleiben.

Diese Aufgabe ist durch das im Anspruch 1 bestimmte Formteil und durch das im nebengeordneten Anspruch bestimmte Herstellverfahren gelöst. Besondere Ausführungsarten der Erfindung sind in den Unteransprüchen bestimmt.

Die Oberfläche der Sichtseite des Formteils, insbesondere eine im Gebrauchszustand des Formteils im Wesentlichen horizontale Oberfläche der Sichtseite, weist durch Poren gebildete Unebenheiten oder eine entsprechende Rauhigkeit auf. Durch Untersuchungen wurde festgestellt, dass die Form dieser Poren, insbesondere deren Breite und Tiefe und darüber hinaus das Aspektverhältnis von Tiefe zu Breite der Poren einen großen Einfluss auf die Reinigungsfähigkeit der Oberfläche haben. Gleichzeitig wird auch die Kratzempfindlichkeit durch die Topografie der Oberfläche bestimmt, so dass gewährleistet sein muss, dass bei einer Verbesserung der Reinigungsfreundlichkeit die Kratzempfindlichkeit nicht wesentlich erhöht ist.

Hierzu wurde die Oberfläche der Sichtseite erfindungsgemäßer Formteile an mehreren, voneinander beabstandeten Positionen vermessen. Beispielsweise wurden insgesamt fünf voneinander beabstandete Messfelder in jeweils mehreren Bahnen abgetastet, um dadurch insbesondere den Anteil der durch Poren gebildeten Oberfläche der Sichtseite und den Anteil der sonstigen Oberfläche zu ermitteln. Hierzu wurde ein Grenzwert für die Tiefe einer Unebenheit festgelegt, beispielsweise 10 *µ*m, ab welchem die Unebenheit als Pore betrachtet wird. Anschließend wurden in jedem Messfeld mehrere Proben hinsichtlich Ihrer Breite, Tiefe und sonstigen wesentlichen Parameter untersucht und aus den gemessenen Werten jeweils der Mittelwert bestimmt.

Es wurde festgestellt, dass dann, wenn mehr als 30 % und weniger als 90 %, insbesondere mehr als 40 % und weniger als 80 % und vorzugsweise mehr als 50 % und weniger als 65 % der Oberfläche (8) der Sichtseite durch Poren gebildet ist, deren Breite im Mittelwert mehr als 0,1 mm und weniger als 1 mm beträgt, deren Tiefe im Mittelwert mehr als 10 *µ*m und weniger als 50 *µ*m beträgt, und das Verhältnis von Tiefe zu Breite der Poren im Mittelwert zwischen 1:4 und 1:30 beträgt, die guten mechanischen Gebrauchseigenschaften erhalten bleiben, aber wesentliche Verbesserungen in der Reinigungsfähigkeit erzielt werden, insbesondere bei Formteilen, deren Farbe durch die Farbe der Füllstoffpartikel bestimmt ist und deren Bindemittelmatrix transparent ist und insbesondere weniger als 1 % Farbpigmente enthält.

Außerdem wurde festgestellt, dass sich durch diese besondere Oberflächentopografie eine Reduzierung der Wasseraufnahme beim Wasserdampftest ergibt, dadurch eine geringere Aufhellung, was insbesondere bei dunklen Farben der Formenteile von besonderem Vorteil ist. Insbesondere die im Gebrauchszustand des Formteils im Wesentlichen horizontalen Sichtseiten weisen die erfindungsgemäße Oberflächentopografie auf. Bei Einbauspülbecken ist dies beispielsweise der Boden des beckenförmigen Abschnitts und/oder die Abtropffläche. Im Fall von Arbeitsplatten ist die gesamte die Sichtseite bildende Fläche mit einer erfindungsgemäßen Topografie versehen.

In einer Ausführungsart beträgt der Mittelwert der Breite der Poren mehr als 0,2 mm und weniger als 0,5 mm beträgt, insbesondere mehr als 0,25 mm und weniger als 0,45 mm. Die Breite der Poren wird durch den kürzesten Abstand von zwei einander in Bezug auf den tiefsten Punkt der Pore gegenüberliegenden lokalen Höhenmaxima der Oberfläche bestimmt. Da die Poren in der Regel nicht kreisrund sind, variiert die Breite der Poren. Die Länge der Poren kann gleich der Breite der Poren sein oder ein Mehrfaches hiervon betragen.

In einer Ausführungsart beträgt der Mittelwert der Tiefe der Poren mehr als 12 *µ*m und weniger als 35 *µ*m beträgt, insbesondere mehr als 15 *µ*m und weniger als 25 *µ*m. Die Tiefe der Poren wird dabei durch die Länge der durch den tiefsten Punkt der Pore durchgehenden Normale auf eine Verbindungslinie gemessen, die durch zwei einander in Bezug auf den tiefsten Punkt gegenüberliegende lokale Höhenmaxima der Pore bestimmt ist.

In einer Ausführungsart beträgt der Mittelwert des Verhältnisses von Tiefe zu Breite der Poren weniger als 1:8 und mehr als 1:30 beträgt, insbesondere weniger als 1:10 und mehr als 1:25 und vorzugsweise weniger als 1:12 und mehr als 1:25. Dieses sogenannte Aspektverhältnis bestimmt die Reinigungsfreundlichkeit der Oberfläche des Formteils. Da das Aspektverhältnis wesentlich von der Breite der Pore abhängig ist, und diese bei von der Kreisform abweichenden Poren variiert, ist auch die Reinigungsfreundlichkeit grundsätzlich richtungsabhängig. Durch eine statistisch im Wesentlichen gleichverteilte Anordnung und Ausrichtung der von der Kreisform abweichenden Poren ergibt sich aber im Mittel eine von der Richtung unabhängige Reinigungsmöglichkeit.

In einer Ausführungsart weisen die Poren einen Porenneigungswinkel auf, dessen Mittelwert mehr als 8° und weniger als 30° beträgt, insbesondere mehr als 10° und weniger als 25°, und vorzugsweise mehr als 12° und weniger als 22° oder mehr als 12° und weniger als 20°. Der Porenneigungswinkel ist dabei jener Winkel, der von zwei Schenkeln eingeschlossen ist. Der erste Schenkel ist durch die Verbindungslinie von zwei in Bezug auf den tiefsten Punkt der Pore einander gegenüberliegenden lokalen Höhenmaxima der Pore bestimmt. Der zweite Schenkel ist festgelegt durch die beiden Punkte auf der Porenkontur, die einer Porentiefe von 10 % bzw. von 90 % entsprechen. Alternativ oder auch ergänzend kann der erste Schenkel durch eine Horizontale gebildet sein und/oder der zweite Schenkel kann durch die Tangente an den Abschnitt der Kontur der Pore mit der größten Steigung gebildet sein. Im Falle eines digitalen Messmikroskopes ist der Abschnitt mit der größten Steigung der Kontur der Pore visuell durch eine starke Änderung der die Höhe repräsentierenden Farbe erkennbar oder auch automatisch ermittelbar. Um keine Fehlmessungen durch einzelne Ausreißer zu erhalten, kann bereits bei der Messung nicht nur ein singulärer Punkt vermessen werden, sondern über eine vorgebbare Messfläche von beispielsweise 4, 25, 100 oder 400 *µ*m2 eine Mittelwertbildung vorgenommen werden. Außerdem ergibt sich eine weitere Mittelung der Messwerte durch die Bildung des Mittelwertes über mehrere Poren einer Probe und/oder über mehrere Messstellen auf einer Probe. Durch den erfindungsgemäßen Porenneigungswinkel ist die Reinigungsfreundlichkeit weiter verbessert.

In einer Ausführungsart sind die durch die Poren gebildeten Unebenheiten der Oberfläche unregelmäßig. Dadurch ergibt sich eine Richtungsunabhängigkeit der Reinigungsmöglichkeit der Oberfläche.

Grundsätzlich können die Poren auch durch eine entsprechend ausgebildete Oberfläche der Form hergestellt sein, insbesondere wenn eine Bindemittelmatrix die Formenoberfläche praktisch perfekt nachbildet, wie dies in der EP 1 807 453 B1 beschrieben ist.

In einer Ausführungsart sind die Poren formenfrei durch Abschrumpfen von der Form während des Aushärtens des polymeren Bindemittels hergestellt. Die Füllstoffpartikel sind nach dem Aushärten des Bindemittels mit einer geschlossenen Schicht polymerisierten Bindemittels beschichtet. Das Abschrumpfen ist bedingt durch die Polymerisation des in dem Bindemittel enthaltenen Monomers. Wie stark das Formteil bzw. die Bindemittelmatrix beim Aushärten von der Form abschrumpft, kann durch Zusatzstoffe beeinflusst werden, insbesondere durch Zugabe von Vernetzer reduziert werden, wie dies in der EP 1 807 453 B1 beschrieben ist. Unter anderem durch den Anteil des Vernetzers an der Bindemittelmasse kann daher die Form der Poren beeinflusst werden.

Als Vernetzer wird vorzugsweise ein zweifach oder mehrfach funktionelles Monomer oder Polymer verwendet, insbesondere ein zweifach oder mehrfach funktionelles Acrylat oder Methacrylat, wie beispielsweise Ethylenglykoldimethacrylat oder Trimethylolpropantrimethacrylat (TRIM). Weitere mögliche Vernetzer sind Pentaerythritoltriacrylat, Pentaerythritoltetraacrylat, Glycerindimethacrylat oder Bishphenol-A-ethoxylat(2)dimethacrylat. Es kann auch vorteilhaft sein, eine Kombination aus zwei oder mehreren derartigen Vernetzern einzusetzen.

Das Abformen erfolgt vorzugsweise durch einen Gießformvorgang, durch den insbesondere eine weitgehend homogene Verteilung der Füllstoffpartikel in dem Bindemittel erreichbar ist bei gleichzeitig verhältnismäßig hoher Packungsdichte der Füllstoffpartikel in dem hergestellten Formteil.

In einer Ausführungsart bestimmen die Füllstoffpartikel im Wesentlichen die Farberscheinung des Formteils auf der Sichtseite. Die Füllstoffpartikel können eine Eigenfarbe aufweisen und/oder an der Oberfläche eine Farbbeschichtung aufweisen. Die durch das Bindemittel gebildete Matrix ist dagegen im Wesentlichen transparent; allenfalls wird ein Pigment mit einem Masseanteil von weniger als 1 %, insbesondere weniger als 0,5 %, und vorzugsweise weniger als 0,2 %, bezogen auf die Masse des Formteils, zur Farbunterstützung der Füllstoffpartikel eingesetzt, speziell bei schwarzen oder dunklen Formteilen. Dessen ungeachtet bestimmt die Farbe der Füllstoffpartikel die Farbe des Formteils.

In einer Ausführungsart beträgt der Massenanteil der Füllstoffpartikel zwischen 40 % und 85 % bezogen auf die Masse des Formteils, insbesondere zwischen 60 % und 80 % und vorzugsweise zwischen 65 % und 76 %. Dadurch wird die Festigkeit und insbesondere Kratzfestigkeit des Formteils gewährleistet.

In einer Ausführungsart weisen die Füllstoffpartikel eine gegenüber dem Bindemittel höhere Mohshärte auf. Dadurch können die mechanischen Eigenschaften, insbesondere die Abriebfestigkeit, des hergestellten Formteils durch die Wahl der Füllstoffpartikel bestimmt oder jedenfalls weitgehend beeinflusst werden. In einer Ausführungsart weisen mehr als 50 %, vorzugsweise mehr als 75 %, der Füllstoffpartikel eine Mohshärte von mindestens 6 auf, insbesondere eine Mohshärte von mindestens 7. Es kommen grundsätzlich alle Füllstoffe in Betracht, die eine entsprechend hohe Mohshärte aufweisen. In einer Ausführungsart besteht mindestens ein Teil der Füllstoffpartikel, vorzugsweise alle Füllstoffpartikel, aus Siliciumdioxid. Die Füllstoffpartikel können in Form von Sand oder Mehl und insbesondere mit mehreren Fraktionen unterschiedlicher Korngröße eingebracht werden. Es können auch Modifikationen des Siliciumdioxids als Füllstoffpartikel verwendet werden, beispielsweise Cristobalit.

In einer Ausführungsart weisen die Füllstoffpartikel eine erste Fraktion mit einer Korngröße von mindestens 0,1 mm, insbesondere mindestens 0,2 mm und vorzugsweise mindestens 0,3 mm, auf mit einem Masseanteil von mehr als 40 %, insbesondere mehr als 50 % und vorzugsweise mehr als 55 %, bezogen auf die Masse des Formteils. Mindestens ein Teil der ersten Fraktion kann eine farbige Beschichtung aufweisen, durch die das Erscheinungsbild des Formteils wesentlich bestimmt ist.

In einer Ausführungsart weisen die Füllstoffpartikel eine Fraktion mit einer Korngröße von maximal 0,1 mm auf, insbesondere maximal 0,08 mm und vorzugsweise maximal 0,05 mm, mit einem Masseanteil von mehr als 3 %, insbesondere mehr als 5 % und vorzugsweise mehr als 10 %, bezogen auf die Masse des Formteils. Der Masseanteil dieses feineren Füllstoffes kann weniger als 40 %, insbesondere weniger als 30 % und vorzugsweise weniger als 20 %, betragen, bezogen auf die Masse des Formteils. Neben einer Erhöhung der Reinigungsfreundlichkeit wird durch den Zusatz dieses feinen Füllstoffs auch die Schlagzähigkeit des Formteils erhöht.

In einer Ausführungsart weisen die Füllstoffpartikel neben der oben genannten ersten Fraktion eine zweite Fraktion mit einer Korngröße zwischen 0,05 mm und 0,2 mm auf, mit einem Masseanteil zwischen 3 % und 25 %, insbesondere zwischen 4 % und 20 % und vorzugsweise zwischen 4,5 % und 15 %, bezogen auf die Masse des Formteils. Weiterhin weisen die Füllstoffpartikel eine dritte Fraktion mit einer Korngröße zwischen 0,01 mm und 0,05 mm auf, mit einem Masseanteil zwischen 4 % und 25 %, insbesondere zwischen 6 % und 20 % und vorzugsweise zwischen 8 % und 15 %, bezogen auf die Masse des Formteils.

Damit wurden Formteile mit einer Oberfläche hergestellt, bei der mehr als 30 % und weniger als 90 %, insbesondere mehr als 40 % und weniger als 80 % und vorzugsweise mehr als als 50 % und weniger als 65 % der Oberfläche der Sichtseite durch Poren gebildet ist, deren Breite mehr als 0,25 mm und weniger als 0,45 mm beträgt, deren Tiefe mehr als 15 *µ*m und weniger als 25 *µ*m beträgt, und das Verhältnis von Tiefe zu Breite der Poren zwischen 1:12 und 1:25 beträgt. Derartige Formteile zeigten bei sehr guten mechanischen Gebrauchseigenschaften, insbesondere Kratzfestigkeit und Schlagfähigkeit, eine hervorragende Reinigungsfähigkeit. Die hergestellten Formteile weisen eine von einer Plattenform abweichende dreidimensionale Form auf, insbesondere weist das Formteil mindestens einen beckenförmigen Abschnitt auf.

Die Erfindung betrifft auch ein Verfahren zum Herstellen eines solchen Formteils, wobei das Formteil aus einem Kompositwerkstoff mit einem ausgehärteten polymeren Bindemittel und darin eingelagerten Füllstoffpartikeln durch Abformen einer vorzugsweise mehrfach verwendbaren Form hergestellt wird. Das Formteil wird dabei durch Gießformen hergestellt, indem die aus Bindemittel, Füllstoffpartikeln und gegebenenfalls weiteren Zuschlagstoffen bestehende Reaktionsmasse in die Form eingefüllt wird.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt einen Schnitt durch ein erfindungsgemäßes Formteil,
- Fig. 2: zeigt eine vergrößerte Draufsicht auf einen Ausschnitt des Formteils der Fig. 1 im Bereich der Abtropffläche,
- Fig. 3: zeigt das Profil der Oberfläche der Sichtseite des Formteils entlang der in der Fig. 2 gezeigten Bahn,
- Fig. 4: zeigt die Zusammensetzung von insgesamt acht Proben, und
- Fig. 5: zeigt die bezüglich der Gebrauchseigenschaften erzielten Ergebnisse der acht Proben.

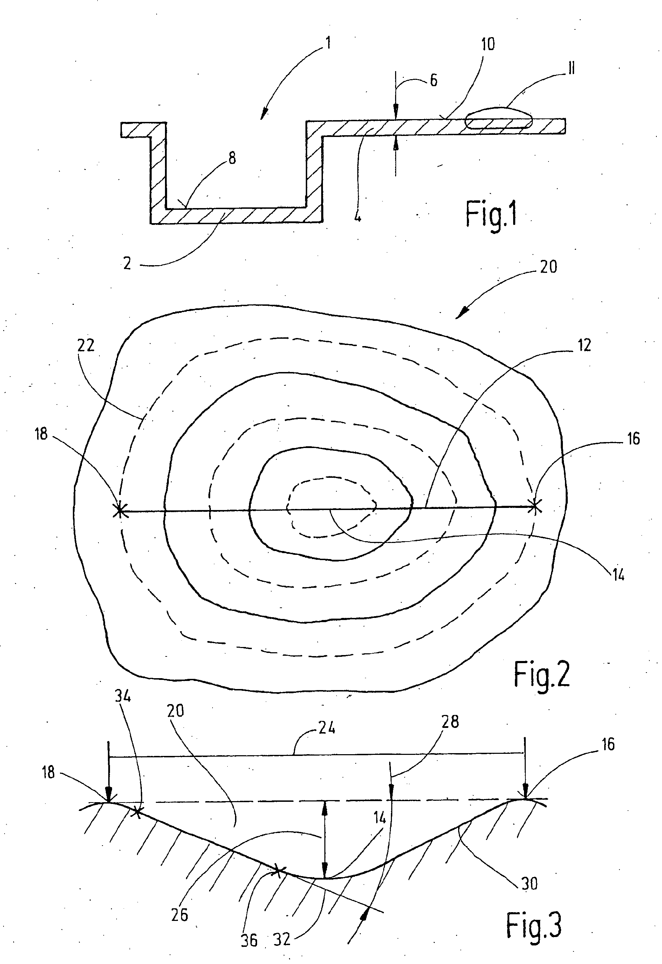

Die Fig. 1 zeigt einen Schnitt durch ein erfindungsgemäßes Formteil 1, bei dem es sich um ein Küchenspülbecken handelt, insbesondere um ein Einbauspülbecken, mit einem beckenförmigen Abschnitt 2 und einer einstückig damit ausgebildeten Abtropffläche 4. Das Formteil 1 ist aus einem Kompositwerkstoff hergestellt mit einem ausgehärteten polymeren Bindemittel und darin eingelagerten Füllstoffpartikeln. Die Herstellung erfolgt durch Abformen einer vorzugsweise mehrfach verwendbaren Form. Die Wandstärke 6 des Formteils 1 beträgt im Ausführungsbeispiel zwischen 5 und 15 mm. Im eingebauten Zustand des Küchenspülbeckens bildet die Sichtseite 10 die Oberfläche der Abtropffläche 4 und ist im Wesentlichen horizontal ausgerichtet, ebenso wie die Bodenfläche 8 des beckenförmigen Abschnitts 2. Insbesondere diese horizontalen Flächen der Sichtseite 10 weisen eine erfindungsgemäße Oberflächentopografie auf.

Eine bevorzugte Zusammensetzung des Formteils 1 besteht aus 60 bis 80 Gew.% mineralischem Füllstoff, insbesondere zwischen 68 und 75 %, vorzugsweise aus SiO₂. Mehr als 40 Gew.% der Füllstoffpartikel, bezogen auf die Masse des Formteils 1, weisen eine Partikelgröße von mehr als 0,1 mm auf, insbesondere mehr als 0,2 mm und vorzugsweise mehr als 0,3 mm. Daneben wird eine zweite und gegebenenfalls auch noch eine dritte Fraktion von Füllstoffpartikeln mit einer kleineren Korngröße eingesetzt, beispielsweise eine zweite Fraktion mit einer Korngröße zwischen 0,05 mm und 0,2 mm mit einem Masseanteil zwischen 3 % und 25 %, und eine dritte Fraktion mit einer Korngröße zwischen 0,01 mm und 0,05 mm mit einem Masseanteil zwischen 4 und 25 %, jeweils bezogen auf die Masse des Formteils 1.

Als Bindemittel wird eine Lösung aus Polymethylmethacrylat (PMMA) in Methylmethacrylat (MMA) eingesetzt, wobei der Masse-Anteil des PMMA an dieser Lösung zwischen 15 und 30 % beträgt. Insgesamt beträgt der Gewichtsanteil des Bindemittels zwischen 20 und 35 %, insbesondere 25 und 30 %, bezogen auf die Masse des Formteils. Der MMA-Anteil bezogen auf die Masse des Formteils beträgt zwischen 15 und 25 %, insbesondere zwischen 18 und 23 %. Der PMMA-Anteil beträgt bezogen auf die Masse des Formteils 1 zwischen 3 und 8 %, insbesondere zwischen 4 und 6 %. Darüber hinaus kann noch ein Vernetzer mit einem Gewichtsanteil zwischen 0,2 und 2 %, insbesondere zwischen 0,3 und 1 % und vorzugsweise zwischen 0,4 und 0,7 %, bezogen auf die Masse des Formteils, zugesetzt werden.

Weiterhin kann noch ein Initiator in einer Menge zwischen 0,3 und 2 Gew.%, bezogen auf die Masse des Formteils, zugesetzt sein, beispielsweise ein Peroxid. Außerdem können Farbpigmente mit einem Anteil zwischen 0,05 und 2 %, insbesondere zwischen 0,05 und 1 % und vorzugsweise zwischen 0,05 und 0,3 %, bezogen auf die Masse des Formteils, und/oder Flitterelemente mit einem Anteil zwischen 0,05 und 1 %, insbesondere zwischen 0,05 und 0,6 % und vorzugsweise zwischen 0,1 und 0,3 %, bezogen auf die Masse des Formteils, zugesetzt sein, durch die sich ein Metallic-Effekt der Sichtseite ergibt.

Die Fig. 2 zeigt eine vergrößerte Draufsicht auf einen Ausschnitt des Formteils 1 der Fig. 1 im Bereich der Abtropffläche 4. Im Ausführungsbeispiel wurde das Formteil an fünf voneinander beabstandeten Positionen vermessen. Innerhalb eines Messfeldes von jeweils 1.200 *µ*m auf 1.500 *µ*m wurde an jeder Position die Topographie der Oberfläche entlang von fünf im Abstand von jeweils 300 *µ* parallel zueinander verlaufenden Messbahnen ermittelt. Unebenheiten mit einer Tiefe von mindestens 10 *µ*m wurden als Pore 20 definiert. Aus den so ermittelten Werten wurde der Anteil der Poren 20 an der Oberfläche errechnet. Anschließend wurden innerhalb jedes Messfeldes insgesamt drei Poren 20 vermessen, indem die in der Fig. 2 dargestellte Topographie ermittelt wurde. Aus den Messwerten wurde der arithmetische Mittelwert bestimmt.

In der Fig. 2 sind Höhenlinien mit einem Höhenabstand von jeweils 5 *µ*m einer Pore der Oberfläche dargestellt. Die Fig. 3 zeigt in nichtmaßstäblicher Darstellung das Profil der Oberfläche der Sichtseite 10 des Formteils 1 entlang der in der Fig. 2 gezeigten Bahn 12. Die Bahn 12 verbindet dabei zwei in Bezug auf den tiefsten Punkt 14 der Pore 20 einander gegenüberliegende lokale Höhenmaxima 16, 18, die auf einer Begrenzungslinie 22 der Pore 20 liegen. Der Abstand der beiden lokalen Höhenmaxima 16, 18 bestimmt die Breite 24 der Pore 20, die im Ausführungsbeispiel 319 *µ*m beträgt. Der senkrechte Abstand des tiefsten Punkts 14 von der Verbindungslinie zwischen den beiden lokalen Höhenmaxima 16, 18 definiert die Tiefe 26 der Pore 20, die im Ausführungsbeispiel 18,3 *µ*m beträgt. Das Verhältnis von Tiefe 26 zu Breite 24 bestimmt das Aspektverhältnis der Pore 20, das im vorliegenden Fall 17,4 beträgt. Der Porenneigungswinkel 28 ist der von der Verbindungslinie zwischen den beiden lokalen Höhenmaxima 16, 18 einerseits und einem Schenkel 32 andererseits eingeschlossene Winkel. Der Schenkel 32 ist festgelegt durch einen ersten Punkt 34 auf der Porenkontur 30, der in einer Tiefe von 10 % der Porentiefe 26 liegt, und einen zweiten Punkt 36, der in einer Tiefe von 90 % der Porentiefe 26 liegt; alternativ hierzu ist der Schenkel 32 auch festlegbar durch die Tangente an die steilste Stelle der Porenkontur 30. Im Ausführungsbeispiel beträgt der Porenneigungswinkel 28 in beiden Fällen etwa 14,8°.

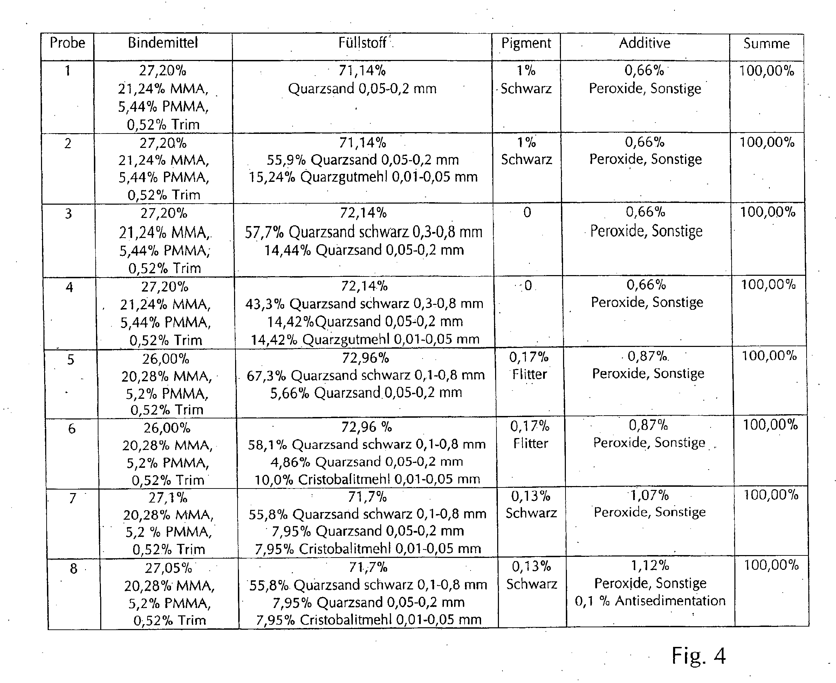

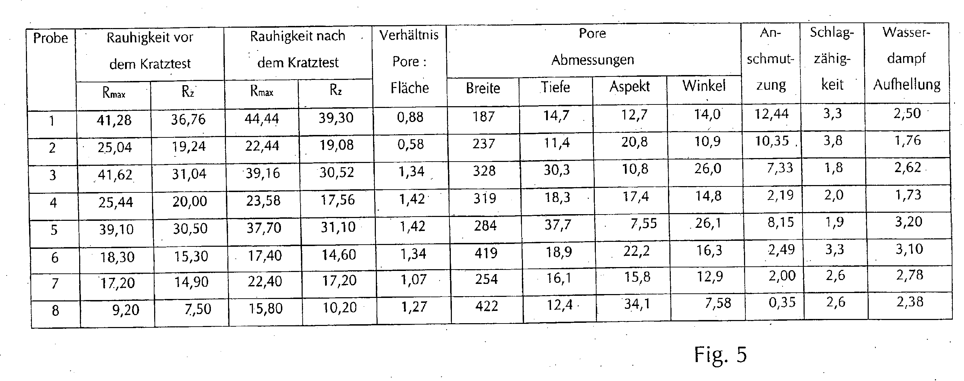

Die Fig. 4 zeigt die Zusammensetzung von insgesamt acht Proben, die hinsichtlich des Bindemittelgehalts und der Zusammensetzung des Bindemittels im Wesentlichen identisch sind, die sich aber hinsichtlich des Füllstoffes unterscheiden. Die Fig. 5 zeigt die messtechnisch ermittelten Rauigkeiten und Porenwerte sowie die erzielten Gebrauchseigenschaften. Für die gemessenen Parameter maximale Rautiefe Rₘₐₓ und gemittelte Rautiefe R_{z}, jeweils vor und nach einem Kratztest, gilt, dass die Messwerte umso kleiner sind, je glatter die Oberfläche ist. Die Bestimmung der gemittelten Rautiefe R_{z} und der maximalen Rautiefe Rₘₐₓ erfolgte gemäß DIN 4768 oder DIN EN ISO L562, Ausgabe: 1998-09. Die gemittelte Rautiefe R_{z} wird durch eine Mittelung über fünf Einzelrautiefen bestimmt, so dass der Einfluss von Ausreißern auf den Messwert gemindert ist. Die maximale Rautiefe Rₘₐₓ ist die größte Einzelrautiefe innerhalb der Gesamtmessstrecke, deren Länge vorgebbar ist, und im Ausführungsbeispiel 15 mm betragen hat.

Die Rauigkeit wurde nach der Herstellung der Probenstücke als "Rauigkeit vor dem Kratztest" gemessen. Anschließend wurde ein Kratztest durchgeführt, wobei das zugehörige Kratzgerät der DIN 53799 T10 oder der DIN 13310 entspricht, und der Ritzdiamant einen 60° Kegelschliff aufweist mit 90 *µ*m Randdurchmesser.

Der Anteil der Fläche der Poren 20 an der Oberfläche des Formteils 1 kann wie vorstehend beschrieben ermittelt werden. In der Fig. 5 ist diesbezüglich für jede Probe der errechnete Quotient ("Verhältnis Pore : Fläche") der Fläche der Poren 20 und der Fläche des Teils der Oberfläche, die nicht als Pore 20 betrachtet wird, angegeben. Einem Wert des Quotienten von beispielsweise 1 entspricht ein Flächenanteil der Poren 20 an der gesamten Oberfläche von 50 %, ein Quotient von 1,5 entspricht einem Flächenanteil der Poren 20 von 60 %.

Die Porenabmessungen wurden mit Hilfe eines digitalen Messmikroskops ermittelt, mit dem es möglich ist, die Oberfläche in kleinen Schichten abzufotografieren. Daraus wird dann ein flächiges Oberflächen-Topografiebild errechnet, mit dem die einzelnen Poren messtechnisch erfasst werden können.

Hinsichtlich der Reinigungsfreundlichkeit ist der Anschmutzungsparameter von besonderer Bedeutung, wobei hierbei ein kleiner Wert eine gute Reinigungsmöglichkeit repräsentiert. Zur Bestimmung wird ein Musterstück definiert verschmutzt und nach erfolgter definierter Abreinigung mit Wasser und einer Reinigungssuspension wird unter definierten Bedingungen der auf der Oberfläche verbleibende Schmutz fotoelektrisch und visuell ermittelt.

Die Schlagzähigkeit wird in Anlehnung an die DIN EN ISO 179 mit einem "FRANK Pendelschlagwerk" mit 0,5 Joule-Pendel bestimmt. Es wurden jeweils zehn Materialproben vermessen und gemittelt. Die angegebenen Zahlenwerte sind in der Einheit mJ/mm² angegeben. Ein hoher Wert steht für eine gute Schlagzähigkeit.

Hinsichtlich der unerwünschten Aufhellung werden Probenstücke einem Wasserdampf ausgesetzt, und anschließend eine Aufhellung bzw. Farbveränderung ermittelt. Hohe Werte stehen dabei für eine unerwünschte stärkere Aufhellung.

Wie sich aus der Fig. 5 ergibt, weist insbesondere die Probe Nr. 4 sehr günstige Eigenschaften auf, nämlich eine gute Reinigungsfreundlichkeit bei hoher Schlagzähigkeit und geringer Aufhellung. Auch die Proben Nr. 6 und Nr. 7 weisen eine sehr gute Reinigungsfreundlichkeit auf sowie eine hohe Schlagzähigkeit und noch akzeptable Werte betreffend die Aufhellung. Der Vergleich der Probe 5 mit einem nur mäßigen Reinigungsverhalten mit der Probe 6, die ein sehr gutes Reinigungsverhalten aufweist, zeigt den Einfluss des Aspektverhältnisses. Die Probe Nr. 8 zeigt aufgrund der sehr glatten Oberfläche ein sehr gutes Reinigungsverhalten, allerdings kein optimales Ergebnis hinsichtlich der Kratzfestigkeit. Die positiven Ergebnisse hinsichtlich der Reinigungsfreundlichkeit gehen mit einer Probenbreite zwischen 250 und 450 *µ*m einher, sowie mit einem Aspektverhältnis zwischen 1:12 und 1:25 und einem Porenneigungswinkel zwischen 12° und 20°.

Wie sich aus Untersuchungen im Zusammenhang mit der vorliegenden Erfindung überraschend ergeben hat, weist eine Oberfläche, die gemäß den in der Technik üblicherweise verwendeten Rauhigkeitswerten Rz bzw. Rmax relativ glatt ist, nicht zwingend eine gute Reinigungsfähigkeit auf, wie sich auch aus einem Vergleich der Probe 2 mit der Probe 4 ergibt. Vielmehr hat jedenfalls auch oder sogar überwiegend die Form von sich auf der Oberfläche befindlichen Poren, insbesondere deren Breite und Tiefe und darüber hinaus das Aspektverhältnis von Tiefe zu Breite der Poren, sowie der Porenneigungswinkel einen großen Einfluss auf die Reinigungsfähigkeit der Oberfläche haben.

## Patentansprüche

1. Formteil (1), wie beispielsweise Küchenspülbecken, Waschbecken, Arbeitsplatte oder dergleichen, hergestellt aus einem Kompositwerkstoff mit einem ausgehärteten polymeren Bindemittel und darin eingelagerten Füllstoffpartikeln durch Abformen einer vorzugsweise mehrfach verwendbaren Form, wobei die Oberfläche (8) einer Sichtseite (10) des Formteils (1), insbesondere einer im Gebrauchszustand des Formteils (1) im Wesentlichen horizontalen Sichtseite (10) des Formteils (1), durch Poren (20) gebildete Unebenheiten aufweist, **dadurch gekennzeichnet, dass** mehr als 30 % und weniger als 90 %, insbesondere mehr als 40 % und weniger als 80 % und vorzugsweise mehr als 50 % und weniger als 65 % der Oberfläche (8) der Sichtseite (10) durch Poren (20) gebildet ist, deren Breite (24) im Mittelwert mehr als 0,1 mm und weniger als 1 mm beträgt, deren Tiefe (26) im Mittelwert mehr als 10 *µ*m und weniger als 50 *µ*m beträgt, und das Verhältnis von Tiefe (26) zu Breite (24) der Poren (20) im Mittelwert zwischen 1:4 und 1:30 beträgt.

2. Formteil (1) nach Anspruch 1, **dadurch gekennzeichnet, dass** der Mittelwert der Breite (24) der Poren (20) mehr als 0,2 mm und weniger als 0,5 mm beträgt, insbesondere mehr als 0,25 mm und weniger als 0,45 mm.

3. Formteil (1) nach Anspruch 1 oder 2, **dadurch gekennzeichnet, dass** der Mittelwert der Tiefe (26) der Poren (20) mehr als 12 *µ*m und weniger als 35 *µ*m beträgt, insbesondere mehr als 15 *µ*m und weniger als 25 *µ*m.

4. Formteil (1) nach Anspruch 1 oder einem der vorangehenden Ansprüche, **dadurch gekennzeichnet, dass** der Mittelwert des Verhältnisses von Tiefe (26) zu Breite (24) der Poren (20) zwischen 1:8 und 1:30 beträgt, insbesondere zwischen 1:10 und 1:25 und vorzugsweise zwischen 1:12 und 1:25.

5. Formteil (1) nach Anspruch 1 oder einem der vorangehenden Ansprüche, **dadurch gekennzeichnet, dass** die Poren (20) einen Porenneigungswinkel (28) aufweisen, dessen Mittelwert mehr als 8° und weniger als 30° beträgt, insbesondere mehr als 10° und weniger als 25°, und vorzugsweise mehr als 12° und weniger als 22° oder mehr als 12° und weniger als 20°.

6. Formteil (1) nach Anspruch 1 oder einem der vorangehenden Ansprüche, **dadurch gekennzeichnet, dass** die durch die Poren (20) gebildeten Unebenheiten der Oberfläche (8) unregelmäßig sind.

7. Formteil (1) nach Anspruch 1 oder einem der vorangehenden Ansprüche, **dadurch gekennzeichnet, dass** die Poren (20) formenfrei durch Abschrumpfen von der Form während des Aushärtens des polymeren Bindemittels hergestellt sind.

8. Formteil (1) nach Anspruch 1 oder einem der vorangehenden Ansprüche, **dadurch gekennzeichnet, dass** die Füllstoffpartikel die Farberscheinung des Formteils (1) auf der Sichtseite (10) im Wesentlichen bestimmen, und dass die durch das Bindemittel gebildete Matrix im Wesentlichen transparent ist.

9. Formteil (1) nach Anspruch 1 oder einem der vorangehenden Ansprüche, **dadurch gekennzeichnet, dass** der Massenanteil der Füllstoffpartikel zwischen 40 % und 85 % beträgt bezogen auf die Masse des Formteils (1), insbesondere zwischen 60 % und 80 % und vorzugsweise zwischen 65 % und 76 %.

10. Formteil (1) nach Anspruch 1 oder einem der vorangehenden Ansprüche, **dadurch gekennzeichnet, dass** die Füllstoffpartikel eine erste Fraktion mit einer Korngröße von mindestens 0,1 mm, insbesondere mindestens 0,2 mm und vorzugsweise mindestens 0,3 mm aufweisen, mit einem Masseanteil von mehr als 40 %; insbesondere mehr als 50 % und vorzugsweise mehr als 55 %, bezogen auf die Masse des Formteils (1).

11. Formteil (1) nach Anspruch 1 oder einem der vorangehenden Ansprüche, **dadurch gekennzeichnet, dass** die Füllstoffpartikel eine Fraktion mit einer Korngröße von maximal 0,1 mm aufweisen, insbesondere maximal 0,08 mm und vorzugsweise maximal 0,05 mm, mit einem Masseanteil von mehr als 3 %, insbesondere mehr als 5 % und vorzugsweise mehr als 10 %, bezogen auf die Masse des Formteils (1).

12. Formteil (1) nach Anspruch 1 oder einem der vorangehenden Ansprüche, **dadurch gekennzeichnet, dass** die Füllstoffpartikel eine erste Fraktion mit einer Korngröße von mindestens 0,1 mm aufweisen, insbesondere mindestens 0,2 mm und vorzugsweise mindestens 0,3 mm, mit einem Masseanteil von mehr als 40 %, insbesondere mehr als 50 % und vorzugsweise mehr als 55 %, bezogen auf die Masse des Formteils (1), dass die Füllstoffpartikel eine zweite Fraktion mit einer Korngröße zwischen 0,05 mm und 0,2 mm aufweisen mit einem Masseanteil zwischen 3 % und 25 %, insbesondere zwischen 4 % und 20 % und vorzugsweise zwischen 4,5 % und 15 %, bezogen auf die Masse des Formteils (1), und dass die Füllstoffpartikel eine dritte Fraktion mit einer Korngröße zwischen 0,01 mm und 0,05 mm aufweisen mit einem Masseanteil zwischen 4 % und 25 %, insbesondere zwischen 6 % und 20 % und vorzugsweise zwischen 8 % und 15 %, bezogen auf die Masse des Formteils (1).

13. Verfahren zum Herstellen eines Formteils (1) nach Anspruch 1 oder einem der vorangehenden Ansprüche, **dadurch gekennzeichnet, dass** das Formteil (1) durch Gießformen hergestellt wird.

## Claims

1. A moulding (1), such as for example a kitchen sink, a wash basin, a work surface or the like, produced from a composite material comprising a cured polymer binder and filler particles embedded in the latter, by moulding a preferably repeatably usable mould, the surface (8) of a visible face (10) of the moulding (1), in particular a visible face (10) of the moulding (1) that is substantially horizontal when the moulding (1) is in use, exhibits irregularities, formed by pores (20), **characterised in that** more than 30% and less than 90%, in particular more than 40% and less than 80%, and preferably more than 50% and less than 65% of the surface (8) of the visible face (10) is formed by pores (20) with a width (24) that is on average more than 0.1 mm and less than 1 mm, a depth (26) that is on average more than 10 µm and less than 50 µm, and the ratio of depth (26) to width (24) of the pores is on average between 1:4 and 1:30.

2. The moulding (1) according to Claim 1, **characterised in that** the average value of the width (24) of the pores (20) is more than 0.2 mm and less than 0.5 mm, in particular more than 0.25 mm and less than 0.45 mm.

3. The moulding (1) according to Claim 1 or 2, **characterised in that** the average value of the depth (26) of the pores (20) is more than 12 µm and less than 35 µm, in particular more than 15 µm and less than 25 µm.

4. The moulding (1) according to Claim 1 or any of the preceding claims, **characterised in that** the average value of the ratio of depth (26) to width (24) of the pores (20) is between 1:8 and 1:30, in particular between 1:10 and 1:25, and preferably between 1:12 and 1:25.

5. The moulding (1) according to Claim 1 or any of the preceding claims, **characterised in that** the pores (20) exhibit a pore inclination angle (28) having an average value that is more than 8° and less than 30°, in particular more than 10° and less than 25°, and preferably more than 12° and less than 22° or more than 12° and less than 20°.

6. The moulding (1) according to Claim 1 or any of the preceding claims, **characterised in that** the irregularities of the surface (8) formed by the pores (20) are not consistent.

7. The moulding (1) according to Claim 1 or any of the preceding claims, **characterised in that** the pores (20) are produced in a form-free manner by shrinking away from the mould during curing of the polymer binder.

8. The moulding (1) according to Claim 1 or any of the preceding claims, **characterised in that** the filler particles essentially determine the colour of the moulding (1) on the visible face (10) and that the matrix formed by the binder is substantially transparent.

9. The moulding (1) according to Claim 1 or any of the preceding claims, **characterised in that** the percentage by weight of the filler particles is between 40% and 85%, based on the weight of the moulding (1), in particular between 60% and 80%, and preferably between 65% and 76%.

10. The moulding (1) according to Claim 1 or any of the preceding claims, **characterised in that** the filler particles have a first fraction with a grain size of at least 0.1 mm, in particular at least 0.2 mm, and preferably at least 0.3 mm, with a percentage by weight of more than 40%, in particular more than 50% and preferably more than 55%, based on the weight of the moulding (1).

11. The moulding (1) according to Claim 1 or any of the preceding claims, **characterised in that** the filler particles have a fraction with a grain size of maximally 0.1 mm, in particular maximally 0.08 mm, and preferably maximally 0.05 mm, with a percentage by weight of more than 3%, in particular more than 5%, and preferably more than 10%, based on the weight of the moulding (1).

12. The moulding (1) according to Claim 1 or any of the preceding claims, **characterised in that** the filler particles have a first fraction with a grain size of at least 0.1 mm, in particular at least 0.2 mm and preferably at least 0.3 mm, with a percentage by weight of more than 40%, in particular more than 50% and preferably more than 55%, based on the weight of the moulding (1), that the filler particles have a second fraction with a grain size of between 0.05 mm and 0.2 mm, with a percentage by weight of between 3% and 25%, in particular of between 4% and 20%, and preferably of between 4.5% and 15%, based on the weight of the moulding (1), and that the filler particles have a third fraction with a grain size of between 0.01 mm and 0.05 mm, with a percentage by weight of between 4% and 25%, in particular of between 6% and 20%, and preferably of between 8% and 15%, based on the weight of the moulding (1).

13. A method for producing a moulding (1) according to Claim 1 or any of the preceding claims, **characterised in that** the moulding (1) is produced by casting moulds.

## Revendications

1. Pièce (1) moulée, comme par exemple bac d'évier, lavabo, plaque de travail ou analogue, fabriquée en un matériau composite, comprenant un liant polymère durci et des particules de charge, qui y sont incorporées par démoulage d'un moule pouvant être utilisé, de préférence, plusieurs fois, la surface (8) d'un côté (10) visible de la pièce (1) moulée, notamment d'un côté (10) visible sensiblement horizontal lorsque la pièce (1) moulée est à l'état utilisé, ayant des inégalités formées par des pores (20), **caractérisée en ce que** plus de 30 % et moins de 90 %, notamment plus de 40 % et moins de 80 %, et de préférence plus de 50 % et moins de 65 %, de la surface (8) du côté (10) visible est formé par des pores (20), dont la largeur (24) est en moyenne supérieure à 0,1 mm et inférieure à 1 mm, dont la profondeur (26) est en moyenne supérieure à 10 µm et inférieure à 50 µm, et le rapport de la profondeur (26) à la largeur (24) des pores (20) est en moyenne compris entre 1:4 et 1:30.

2. Pièce (1) moulée suivant la revendication 1, **caractérisée en ce que** la valeur moyenne de la largeur (24) des pores (20) est supérieure à 0,2 mm et inférieure à 0,5 mm, notamment supérieure à 0,25 mm et inférieure à 0,45 mm.

3. Pièce (1) moulée suivant la revendication 1 ou 2, **caractérisée en ce que** la valeur moyenne de la profondeur (26) des pores (20) est supérieure à 12 µm et inférieure à 35 µm, notamment supérieure à 15 µm et inférieure à 25 µm.

4. Pièce (1) moulée suivant la revendication 1 ou l'une des revendications précédentes, **caractérisée en ce que** la valeur moyenne du rapport de la profondeur (26) à la largeur (24) des pores (20) est comprise entre 1:8 et 1:30, notamment entre 1:10 et 1:25, et de préférence entre 1:12 et 1:25.

5. Pièce (1) moulée suivant la revendication 1 ou l'une des revendications précédentes, **caractérisée en ce que** les pores (20) ont un angle (28) d'inclinaison des pores, dont la valeur moyenne est supérieure à 8° et inférieure à 30°, notamment supérieure à 10° et inférieure à 25°, et de préférence supérieure à 12° et inférieure à 22° ou supérieure à 12° et inférieure à 20°.

6. Pièce (1) moulée suivant la revendication 1 ou l'une des revendications précédentes, **caractérisée en ce que** les inégalités de la surface (10) formées par les pores (20) sont irrégulières.

7. Pièce (1) moulée suivant la revendication 1 ou l'une des revendications précédentes, **caractérisée en ce que** les pores (20) sont fabriquées sans moulage, par une rétraction à partir du moule pendant le durcissement du liant polymère.

8. Pièce (1) moulée suivant la revendication 1 ou l'une des revendications précédentes, **caractérisée en ce que** les particules de charge déterminent, pour l'essentiel, l'aspect coloré de la pièce (1) moulée du côté (10) visible et **en ce que** la matrice formée par le liant est sensiblement transparente.

9. Pièce (1) moulée suivant la revendication 1 ou l'une des revendications précédentes, **caractérisée en ce que** la proportion en masse des particules de charge est comprise entre 40 % et 85 % rapportée à la masse de la pièce (1) moulée, notamment entre 60 % et 80 %, et de préférence entre 65 % et 76 %.

10. Pièce (1) moulée suivant la revendication 1 ou l'une des revendications précédentes, **caractérisée en ce que** les particules de charge ont une première fraction ayant une granulométrie d'au moins 0,1 mm, notamment d'au moins 0,2 mm, et de préférence d'au moins 0,3 mm, en une proportion en masse de plus de 40 %, notamment de plus de 50 %, et de préférence de plus de 55 %, rapportée à la masse de la pièce (1) moulée.

11. Pièce (1) moulée suivant la revendication 1 ou l'une des revendications précédentes, **caractérisée en ce que** les particules de charge ont une fraction ayant une granulométrie de 0,1 mm au maximum, notamment de 0,08 mm au maximum, et de préférence de 0,05 mm au maximum, en une proportion en masse de plus de 3 %, notamment de plus de 5 %, et de préférence de plus de 10 %, rapportée à la masse de la pièce (1) moulée.

12. Pièce (1) moulée suivant la revendication 1 ou l'une des revendications précédentes, **caractérisée en ce que** les particules de charge ont une première fraction ayant une granulométrie d'au moins 0,1 mm, notamment d'au moins 0,2 mm, et de préférence d'au moins 0,3 mm, en une proportion en masse de plus de 40 %, notamment de plus de 50 %, et de préférence de plus de 55 %, rapportée à la masse de la pièce (1) moulée, **en ce que** les particules de charge ont une deuxième fraction ayant une granulométrie comprise entre 0,05 mm et 0,2 mm, en une proportion en masse comprise entre 3 % et 25 %, notamment entre 4 % et 20 %, et de préférence entre 4,5 % et 15 %, rapportée à la masse de la pièce (1) moulée et **en ce que** les particules de charge ont une troisième fraction ayant une granulométrie comprise entre 0,01 mm et 0,05 mm, en une proportion en masse comprise entre 4 % et 25 %, notamment entre 6 % et 20 %, et de préférence entre 8 % et 15 %, rapportée à la masse de la pièce (1) moulée.

13. Procédé de fabrication d'une pièce (1) moulée suivant la revendication 1 ou l'une des revendications précédentes, **caractérisé en ce qu'**on fabrique la pièce (1) moulée par moulage par coulée.
